# EUROPEAN PATENT SPECIFICATION

(11) **EP 0 594 544 B1**
(45) Date of publication and mention of the grant of the patent: **27.11.1996**
(21) Application number: 93830231.2
(22) Date of filing: 27.05.1993
(51) Int. Cl.: H02B 1/20

(54) **An adapter for connecting a multi-phase box-shaped switch to parallel bus-bars**
Adapter für den Anschluss eines kastenförmigen Mehrphasen-Schalters an parallele Stromschienen
Adaptateur pour raccorder un commutateur polyphasé en forme de boîte sur des barres omnibus parallèles

(30) Priority: 19.10.1992 IT MI922393
(43) Date of publication of application: 27.04.1994
(73) Proprietor: BTICINO S.P.A., 20154 Milano (IT)
(72) Inventor: Boffelli, Roberto, I-24030 Mozzo (Bergamo) (IT); Fontana, Rodolfo, I-21100 Varese (IT)
(74) Representative: Maggioni, Claudio

(56) References cited:
- DE-A- 3 413 358
- DE-A- 4 124 487
- DE-U- 9 004 139

## Description

This invention relates to structures for mounting apparatus to electrical panelboards, and in particular, to an adapter for connecting a multi-phase box-shaped switch to parallel bus-bars as disclosed in the preamble of claim 1 and known from DE-A-4 124 487. Similar adaptors are also known from DE-A-3 413 358 and DE-U-9 004 139.

In electrical panelboards for civil and industrial systems, ample use is made of distribution conductors in the form of metal bus-bars arranged parallel to one another in sets of three or four, and frequently laid horizontally. In many cases, the bus-bars are connected directly to the mains by specially provided terminals, and from them the various apparatus in the system are supplied through suitable switches mounted close to respective sets of bus-bars. The switches may be connected electrically, and often mechanically as well, to a set of bus-bars in a variety of ways. One of these uses rigid connection structures consisting of metal conductors held together by insulating crosspieces and arranged for connection -- using bolts, clamps, or other fasteners located within easy reach from the panelboard front -- with one end to the bus-bars, and with another end to the input connections of the switches. Another, more advantageous, because less bulky, connection arrangement provides for the use of adapters which allow the switches to be mounted directly on the bus-bars. A known adapter comprises a body made of an insulating material and having a forward surface acting as a bearing surface for the base of a switch to be mounted, and a rearward surface having means of attachment to the bus-bars. Led out from the body are as many electric conductors, e.g. cables, as are the phases of the switch to be mounted on the adapter. Each conductor is joined, with one end, to an attachment member, located within reach from the front, for attachment to a respective bus-bar. The opposite end of each conductor is adapted for attachment to an input connection of the switch.

In some cases, the bus-bars are connected to the mains with the intermediary of a master switch, rather than directly thereto. The master switch can be connected, through its output connections, to the bus-bars using either a rigid mount or an adapter, as outlined above.

However, the former method has the aforementioned disadvantage of taking up space, while the latter involves the use of an adapter having its electric connection conductors led out of the opposite side with respect to the adapter previously described. It matters to observe that it is impossible to use one adapter in either cases by merely turning it 180° around because the attachment means would then be overturned, thereby making the adapter awkward to mount to a vertical panelboard, and the connection order of the phases would be reversed, which may not infrequently result in the connections getting mixed up. It should also be noted that standard multi-phase, box-shaped toggle switches should be mounted to a vertical panelboard such that their toggles are moved down from above in order to set the switch to its break position from the make position. Thus, the switch cannot be turned around to utilize the same adapter for connecting the bus-bars either to the input or the output connections.

It is the object of this invention to provide an adapter for a multi-phase box-shaped switch of simple construction, which can be used equally well in either of the above mounting schemes.

This object is achieved by an adapter as generally defined and characterized in the first of the appended claims to this specification.

The invention can be better understood by making reference to the following detailed description of an embodiment thereof, to be taken by way of example and not of limitation in conjunction with the accompanying drawing, in which:
Figure 1 is an exploded perspective view showing an adapter according to the invention, a set of bus-bars on which the adapter can be mounted, and a multi-phase box-shaped switch for attachment to the adapter;
Figure 2 is a perspective view of the adapter taken from its side next to the bus-bars;
Figure 2a is an enlarged detail view of the adapter; and
Figure 3 is a side view illustrating a step of the procedure for mounting a switch on the adapter.

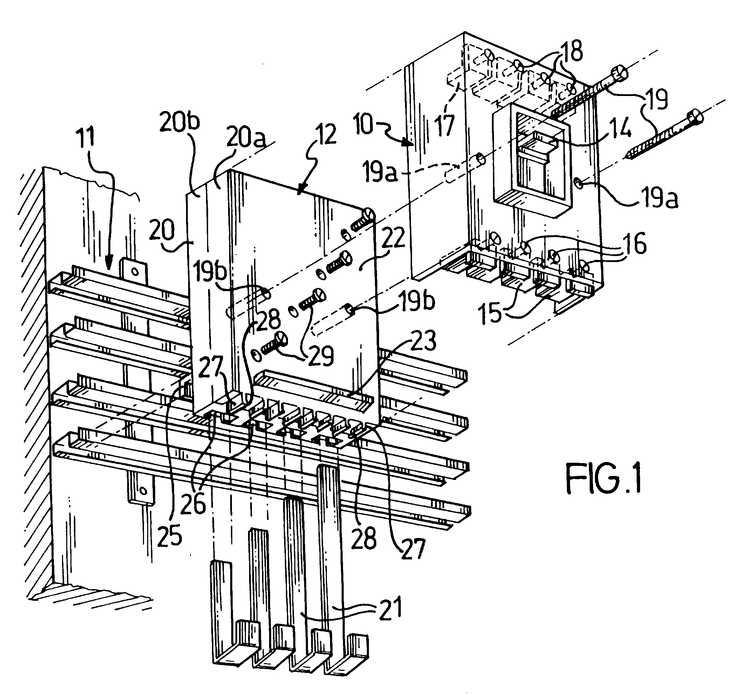

With reference to Figure 1, a multi-phase box-shaped switch, generally shown at 10, is to be connected, both mechanically and electrically through its output connections, to four bus-bars, indicated at 11, of a vertical panelboard, no further shown. This connection is made possible by an adapter, generally shown at 12, according to the invention.

The switch 10 has an operation toggle 14, shown pushed upwards, i.e. into the switch make setting, four connections 15 with respective screw fasteners 16 on the bottom side, and four connections 17 with respective screw fasteners 18 on the top side. In a conventional way, the upper four connections 17 are assumed to be the input connections, the lower four connections 15 being the output connections.

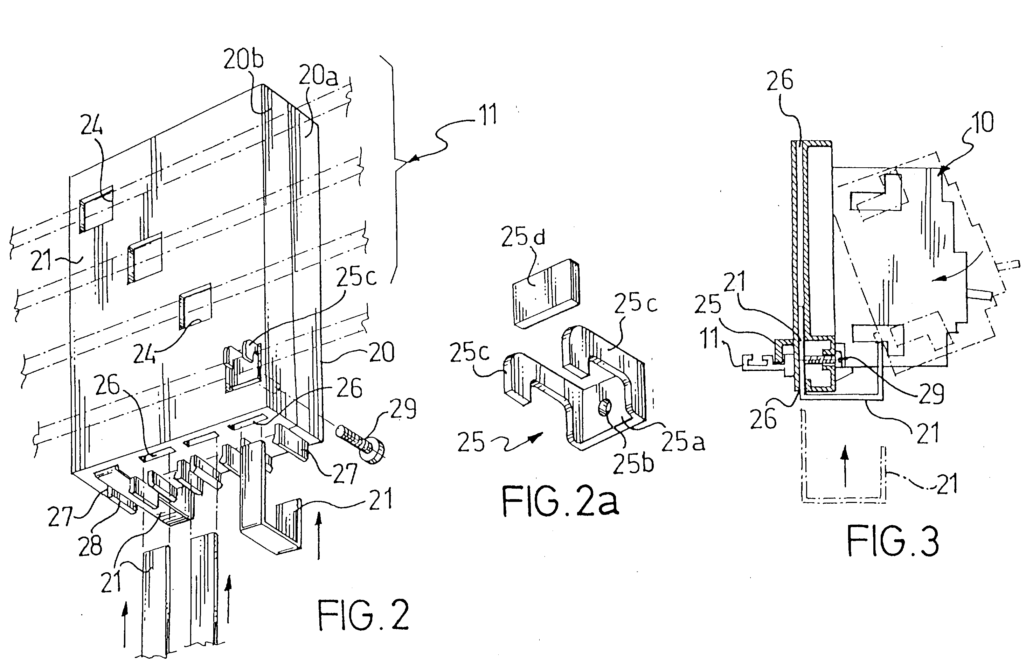

The adapter 12 is basically comprised of a body 20 formed from an insulating material as two shaped elements 20a and 20b being expendiently plastics moldings held together by some suitable means, such as reversible interlock means, and four rigid electric conductors 21, expediently in the form of copper strips. The element 20a of the body 20 has, on its outward face 22, a rib 23 which defines a bearing area for the switch 10 base edge. The two shaped elements 20a and 20b are formed internally, as shown best in Figure 2, with four parallel longitudinal channels 26 constituting receiving seats designed to hold the rigid conductors 21 slidably therein. The conductors are shaped with one end portion bent to a U-like pattern and the other end portion straight for insertion into the adapter seats. This can be done from either side of the adapter. As can be seen, the straight portions have progressively longer lengths so that, once fitted into the seats 26, each straight portion will locate with its end portion overlying one of the bus-bars 11.

The shaped element 20b of the body 20 has four diagonally arranged windows, shown at 24, whence there protrude the ends of as many connectors 25 used for securing and connecting electrically the rigid conductors 21 to their respective bus-bars 11. As shown in Figure 2a, each connector 25 comprises a piece of metal, preferably copper, having a base 25a through-penetrated by a threaded hole 25b, and two substantially C-shaped elements 25c which extend at right angles from the base 25a, a small plate 25d of the same material, and a screw 29 adapted for engagement in the threaded hole 25b. The free ends of the elements 25c jointly provide a sort of hook for mounting the adapter 12 to the bus-bars 11.

The adapter further includes four pairs of elastic elements 27, expediently integral with the shaped element 20a of the body 20, located on either opposite sides thereof crosswise to the seats 26. Each of said element pairs locate close to the end of one seat 26 and have two oppositely located dogs 28 forming a reversible detent arrangement for a rigid conductor 21 fitted inside the seat.

The procedure for mounting the switch 10 to the bus-bars 11 using the adapter 12 comprises the following sequential steps:
mounting the connectors 25 inside the shaped element 20b (the plates 25d being fitted and held in place on the windows 24 by suitable retaining means, not shown);
inserting the conductors 21 into the seats 26 of the adapter from either side thereof, according to whether the switch 10 is to be connected to the bus-bars by its input or output connections, until the detent dogs 28 snap over the outward side of the crosspieces of the respective U-shaped parts;
hooking the adapter 12 with the ends 25c of the connectors 25 onto the bus-bars 11;
fastening the rigid conductors 21 to the bus-bars 11 by tightening down the screws 29 of the connectors 25;
applying the switch 10 to the adapter 12 by placing the connections 15 on the free legs of the U-shaped parts of the rigid conductors 21 and moving the switch until the switch base reaches its seat; the switch will be held in place by the combined action of the rib 23 and the mutual engagement of the connections 15 with the rigid conductors 21;
fastening the switch using screws 19, through-holes 19a in the switch body, and threaded holes 19b in the adapter body;
tightening the screws 16 to hold the rigid conductors 21 securely on the connections 15.

Where the switch 10 must be connected to the bus-bars 11 by its upper connections, i.e. the input ones, rather than its lower or output connections, the rigid conductors 21 are simply inserted into the seats 26 of the adapter 12 top side in the reverse order, that is with the shortest on the right, rather than on the left as in the previous example, and the longest on the left, rather than on the right.

It will be appreciated from the foregoing that the adapter of this invention, additionally to being simple in construction and, hence, economical to manufacture, can be used for mounting switches to bus-bars indifferently by the input or the output connections.

This represents a major advantage from the standpoint of optimizing production, because it enables the number of the products to be stored and delivered to be reduced by virtue of one and the same adapter being usable for two different applications.

While one embodiment of the invention only has been described and illustrated, it is understood that many changes and modifications may be made thereunto without departing from the scope of the invention as defined in the claims. For example, the rigid conductors could have their ends inside the body, rather than perfectly straight, made with one or more steps, or elevations, or recesses, for a more precise and stable fit of same in their seats; furthermore, they may have a round, instead of square, cross-sectional shape, for use with switches having round cross-section connections for the conductors, and accordingly, the seats, connectors, and detent means provided on the adapter body would be altered to suit the different shapes of the conductors; or the rigid conductors, once fitted in their seats, could have the crosspieces of their U-shaped parts in different planes and have the free legs of the "U" with different lengths, that is they could project unevenly from the adapter where needed to fill special mounting demands; obviously, the adapter of this invention may also be provided for switches having a number of poles other than four.

## Claims

1. An adapter for connecting, to parallel bus-bars, either the input or the output of a multi-phase box-shaped switch (10) having input connections (17) on one side and output connections (15) on the opposite side, said adapter (12) comprising: a body (20) made of an insulating material and having opposed side surfaces, a bearing forward surface for the switch (10) base, and hooking means (25c) protruding from its rearward surface for mounting the adapter to the bus-bars (11);
for each phase of the switch (10), a rigid electric conductor (21) having an end portion bent to a U-shape for attachment to one of the switch connections (15,17) and an opposite, substantially straight end portion for attachment to one of the bus-bars (11) crosswise thereto;
within the body (20), a plurality of parallel seats (26) adapted to receive and hold the straight end portions of the rigid conductors (21) therein; and
means (25,29) for fastening and connecting electrically each of the straight portions of the conductors (21) fitted into the parallel seats (26) to a respective one of the bus-bars (11);
characterised in that each of said seats (26) comprises a channel (26) extending between said opposed sides of said body (20), such that the substantially straight end portion of a said rigid conductor (21) is slidable into each said channel (26) from either one of said two opposed side surfaces, allowing the adapter to be connected selectively to either the input connections (17) or the output connections (15) of said switch (10).

2. An adapter according to Claim 1, charaterized in that the body (20) is formed of two shaped elements (20a,20b) being held together and bounding said parallel seats (26) therebetween.

3. An adapter according to either Claim 1 or 2, characterized in that said fastening and electric connection means comprise connectors (25,29), and that said hooking means comprise parts (25c) of said connectors (25,29) projecting from the rearward surface of the body through windows (24) provided in one (20b) of the shaped elements.

4. An adapter according to either Claim 1, 2 or 3, characterized in that the U-bent end portions of the rigid conductors (21) have the same dimensions and the straight end portions have gradually longer lengths. whereby each of the rigid conductors (21) will extend from a common plane, parallel to that side of the connectors (15,17) to which the respective U-bent portions are attached, to a respective one of the bus-bars (11).

5. An adapter according to any of the preceding claims, characterized in that it comprises reversible detent means (27,28) effective to hold the rigid conductors (21) at predetermined locations prior to their attachment to the bus-bars (11).

6. An adapter according to Claim 5, characterized in that the detent means (27,28) comprise elastic elements (27) made fast with the body (20) and extending from the body sides crosswise to the parallel seats (26) and being formed each with a pair of dogs (28) adapted to engage with the outward side of the crosspiece of the U-bent portion of a respective rigid conductor.

## Patentansprüche

1. Adapter zum Verbinden entweder des Eingangs oder des Ausgangs eines mehrphasigen kastenförmigen Schalters, der Eingangsanschlüsse (17) auf einer Seite und Ausgangsanschlüsse (15) auf der gegenüberliegenden Seite aufweist, mit parallelen Stromschienen, wobei der Adapter (12) folgendes umfaßt:
einen aus einem isolierenden Material gefertigten Grundkörper (20) mit sich gegenüberliegenden seitlichen Oberflächen, mit einer tragenden vorderen Oberfläche für den Fuß des Schalters (10) und mit aus seiner hinteren Oberfläche herausragenden Hakenmitteln (25c) zur Befestigung des Adapters an den Stromschienen (11);
einen festen elektrischen Leiter (21) für jede Phase des Schalters (10), mit einem u-förmig gebogenen Endbereich zur Verbindung mit einem der Anschlüsse des Schalters (15, 17) sowie mit einem gegenüberliegenden, im wesentlichen geraden Endbereich für die kreuzweise Verbindung mit einer der Stromschienen (11);
eine Anzahl von parallelen Sitzen (26) innerhalb des Grundkörpers (20), die zur Aufnahme und zum Halten der geraden Endbereiche der Leiter (21) eingerichtet sind; sowie
Mittel (25, 29) zur Befestigung und elektrischen Verbindung jedes in den parallelen Sitzen (26) eingesetzten geraden Endbereichs der Leiter (21) mit jeweils einer entsprechenden Stromschiene (11),
**dadurch gekennzeichnet,** daß
jeder der Sitze (26) einen Kanal (26) aufweist, der sich so zwischen den sich gegenüberliegenden Seiten des Grundkörpers (20) erstreckt, daß der im wesentlichen gerade Endbereich des festen Leiters (21) von jeder der beiden sich gegenüberliegenden Oberflächen her in jeden Kanal (26) einzuschieben ist, so daß der Adapter wahlweise entweder mit den Eingangsanschlüssen (17) oder mit den Ausgangsanschlüssen (15) des Schalters (10) verbunden werden kann.

2. Adapter nach Anspruch 1, **dadurch gekennzeichnet**, daß der Grundkörper (20) aus zwei geformten Elementen (20a, 20b) gebildet ist, die zusammengehalten sind und zwischen sich die parallelen Sitze (26) begrenzen.

3. Adapter nach Anspruch 1 oder Anspruch 2, **dadurch gekennzeichnet,** daß die Mittel zur Befestigung und elektrischen Verbindung Verbinder (25, 29) umfassen, und daß die Hakenmittel Abschnitte (25c) der Verbinder (25, 29) umfassen, welche von der hinteren Oberfläche des Grundkörpers her durch in einem der geformten Elemente (20b) vorgesehene Fenster (24) hervorstehen.

4. Adapter nach Anspruch 1, 2 oder 3, **dadurch gekennzeichnet**, daß die u-förmig gebogenen Endbereiche der festen Leiter (21) gleiche Abmessungen haben und die geraden Endbereiche abgestufte größere Längen aufweisen, wobei jeder der festen Leiter (21) sich von einer gemeinsamen Ebene, die parallel zu der Seite der Anschlüsse (15, 17) verläuft, an der die entsprechenden u-förmigen Bereiche befestigt sind, in Richtung der jeweiligen Stromschiene (11) erstreckt.

5. Adapter nach einem der vorhergehenden Ansprüche, **dadurch gekennzeichnet**, daß lösbare Arretiermittel (27, 28) vorgesehen sind, die geeignet sind, die festen Leiter (21) vor der Befestigung an den Stromschienen (11) in vorbestimmten Positionen zu halten.

6. Adapter nach Anspruch 5, **dadurch gekennzeichnet**, daß die Arretiermittel (27, 28) elastische Elemente (27) umfassen, die an dem Grundkörper (20) befestigt sind und sich von den Seiten des Grundkörpers quer zu den parallelen Steckplätzen (26) erstrecken, und die jeweils mit einem Paar Klauen (28) versehen sind, welche mit der äußeren Seite des Querstücks des u-förmigen Endbereichs eines jeweiligen festen Leiters in Eingriff stehen können.

## Revendications

1. Adaptateur permettant de brancher, sur des barrettes-bus parallèles, soit l'entrée, soit la sortie d'un interrupteur polyphasé (10) en forme de boîtier comportant des bornes d'entrée (17) d'un côté et des bornes de sortie (15) du côté opposé, ledit adaptateur (12) comprenant:
un corps (20) réalisé en un matériau isolant et présentant des surfaces latérales opposées; une surface de support avant pour l'embase de l'interrupteur (10), et des moyens d'accrochage (25c) saillant de sa surface arrière, permettant de monter l'adaptateur sur les barrettes-bus (11);
pour chaque phase de l'interrupteur (10), un conducteur électrique rigide (21) dont une partie d'extrémité est repliée en forme de U en vue d'être reliée à l'une des bornes (15, 17) de l'interrupteur, et une partie d'extrémité opposée essentiellement droite, destinée à être reliée à l'une des barrettes-bus (11), transversalement à celle-ci;
à l'intérieur du corps (20), plusieurs sièges parallèles (26) adaptés pour recevoir et pour maintenir les parties d'extrémité droites des conducteurs rigides (21) dans ledit corps; et
des moyens (25, 29) destinés à fixer et à relier électriquement chacune des parties droites des conducteurs (21) emboîtés dans les sièges parallèles (26) sur une barrette respective des barrettes-bus (11);
caractérisé en ce que chacun desdits sièges (26) comprend un canal (26) s'étendant entre lesdits côtés opposés dudit corps (20), de manière telle que la partie d'extrémité essentiellement droite dudit conducteur rigide (21) puisse être engagée en glissant dans chaque dit canal (26), depuis l'une ou l'autre desdites surfaces latérales opposées, permettant à l'adaptateur d'être branché de façon sélective soit aux bornes d'entrée (17), soit aux bornes de sortie (15) dudit interrupteur (10).

2. Adaptateur selon la revendication 1, caractérisé en ce que le corps (20) est composé de deux éléments profilés (20a, 20b) maintenus l'un contre l'autre et enfermant lesdits sièges parallèles (26) entre eux.

3. Adaptateur selon la revendication 1 ou la revendication 2, caractérisé en ce que lesdits moyens de fixation et de liaison électrique comprennent des connecteurs (25, 29), et en ce que lesdits moyens d'accrochage comprennent des parties (25c) desdits connecteurs (25, 29) qui font saillie depuis la surface arrière du corps, à travers des fenêtres (24) aménagées dans l'un (20b) des éléments profilés.

4. Adaptateur selon l'une des revendications 1, 2 ou 3, caractérisé en ce que les parties d'extrémité repliées en forme de U des conducteurs rigides (21) présentent les mêmes dimensions, et que les parties d'extrémité droites présentent des longueurs augmentant graduellement, de manière que chacun des conducteurs rigides (21) s'étende, depuis un plan commun parallèle au côté des bornes (15, 17), auxquelles les parties correspondantes en U sont reliées, jusqu'à l'une correspondante des barrettes-bus (11).

5. Adaptateur selon l'une quelconque des revendications précédentes, caractérisé en ce qu'il comprend des moyens de crans d'arrêt réversibles (27, 28) servant à maintenir les conducteurs rigides (21) dans des positions prédéterminées avant leur fixation sur les barrettes-bus (11).

6. Adaptateur selon la revendication 5, caractérisé en ce que les moyens de crans d'arrêt (27, 28) comprennent des éléments élastiques (27) solidaires du corps (20) et s'étendant depuis les côtés du corps, transversalement aux sièges parallèles (26), et conformés chacun avec une paire de crans (28) adaptés pour s'engager derrière la face extérieure de la partie de traverse de la partie pliée en U du conducteur rigide correspondant.
